(19) Europäisches Patentamt
European Patent Office
Office européen des brevets

(11) Veröffentlichungsnummer: **0 115 066 B1**

(12) **EUROPÄISCHE PATENTSCHRIFT**

(45) Veröffentlichungstag der Patentschrift: **28.08.91**

(51) Int. Cl.[5]: **C08F 220/14**, G11B 7/26, //(C08F220/14,220:30,220:18, 212:06)

(21) Anmeldenummer: **83113086.9**

(22) Anmeldetag: **24.12.83**

Teilanmeldung 88117643.2 eingereicht am 24/12/83.

# (54) Acrylharze Formmassen mit geringer Wasseraufnahme.

(30) Priorität: **30.12.82 DE 3248602**

(43) Veröffentlichungstag der Anmeldung: **08.08.84 Patentblatt 84/32**

(45) Bekanntmachung des Hinweises auf die Patenterteilung: **28.08.91 Patentblatt 91/35**

(84) Benannte Vertragsstaaten: **DE FR GB IT NL**

(56) Entgegenhaltungen:
**EP-A- 0 097 948**
**DE-A- 2 053 901**
**GB-A- 2 089 523**

**PATENTS ABSTRACTS OF JAPAN, Band 7, Nr. 160 (P-210)[1305], 14. July 1983**

(73) Patentinhaber: **Röhm GmbH**
**Kirschenallee Postfach 4242**
**W-6100 Darmstadt 1(DE)**

(72) Erfinder: **Wenzel, Franz, Dr.**
**Zeyherweg 5**
**W-6100 Darmstadt(DE)**
Erfinder: **Arndt, Peter Joseph, Dr.**
**Im Säbchen 9**
**W-6104 Seeheim-Jungenheim 2(DE)**
Erfinder: **Siol, Werner, Dr.**
**Goerdelerweg 34**
**W-6100 Darmstadt-Eberstadt(DE)**

**EP 0 115 066 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Gebiet der Erfindung

Die Erfindung betrifft Acrylharz-Formmassen mit geringer Wasseraufnahme. Die Wasseraufnahme von Acrylharzen kann durch die wasserhaltige Atmosphäre oder durch sonstige Kontakte mit Wasser erfolgen. Die Wasseraufnahme hängt bei Acrylgläsern von materialbedingten Faktoren (wie Sättigungskonzentration und Diffusionskonstante) und umweltbedingten Faktoren (Geometrie des betreffenden Gegenstandes, Konzentration und Druck des feuchten Mediums, Lagerungszeit und Temperatur) ab.

Hinsichtlich der mechanischen Eigenschaften der Acrylharze übt Wasser eine gewisse Weichmacherwirkung aus. Zug- und Biegefestigkeit sowie E-Modul nehmen etwas ab, dagegen werden Schlagzähigkeit und Biegewinkel erhöht. In der traditionellen Verarbeitungstechnologie konnte jedoch der Einfluß des Wassers auf die physikalischen Eigenschaften von Acrylharzen ohne weiteres in Kauf genommen werden. wird in Vieweg-Esser, Kunststoff-Handbuch, Band IX, "Polymethacrylate", Hanser-Verlag 1975, Seite 425, festgestellt:

"Da die Wasseraufnahme von Polymethylmethacrylat vor allem bei Temperaturen unter 100 °C im Verhältnis zu manchen anderen Kunststoffen, wie Polyamid oder Celluloseacetat, verhältnismäßig klein ist, bewegen sich die meisten physikalischen Eigenschaftsänderungen bei Acrylgläsern in engen, in der praktischen Anwendung häufig gar nicht mehr wahrzunehmenden Grenzen."

Stand der Technik

In der US-PS 2 477 293 aus dem Jahre 1947 werden den Polymeren und Copolymeren aus Aryl- und substituierten Arylacrylaten und -methacrylaten Fluidität, Elastizität, Plastizität, Zugfestigkeit, Wirkung als elektrischer Widerstand, Beständigkeit gegen Wasser, organische Flüssigkeiten und Gase, Transparenz usw. zugeschrieben. Eine Lehre zum technischen Handeln in diesem Sinne liegt indessen nicht vor.

In der US-PS 2 129 685 aus dem Jahre 1934 werden Copolymere aus Phenylestern der Methacrylsäure und polymerisierbaren Derivaten der Acryl- oder der Methacrylsäure beansprucht. Erwähnt werden ferner Gemische aus PMMA und Polymerisaten bzw. Copolymerisaten von Phenylestern der Acryl- bzw. der Methacrylsäure.

Feste Copolymerisate aus 1 - 25 Gew.-% an Alkoxyphenylmethacrylaten und -acrylaten und monoäthylenisch ungesättigten Monomeren wie z.B. Methylmethacrylat, Styrol, Vinylacetat u.a. sind Teil der Lehre der US-PS 3 409 589.

Aus der JP-0S 78 34 853 (vgl. Chem. Abstr. 89, 130345q) sind thermoplastische Harze auf der Basis von 40 bis 99 % Polycarbonat, 1 bis 60 % eines Vinylcopolymeren gebildet aus 60 bis 98 % vinylaromatischen Monomeren, 2 bis 40 % Aralkyl- oder Naphthyl(meth)acrylaten, 0 bis 3 % polyfunktionellen Monomeren und 0 bis 1 % Allylmonomeren bekannt.

Die Acrylharze des Standes der Technik konnten die an sie gerichteten Anforderungen weitgehend erfüllen. Probleme traten gelegentlich auf, wenn Wasser auf relativ dünnes Material ungleichmäßig einwirken konnte, z.B. bei Aquarien mit zu dünnen Materialstärken. Bekanntlich kann das Material auf ungleichmäßige Wasseraufnahme bzw. die Ausbildung eines Feuchtigkeitsgradienten mit Verziehen oder Durchbiegen reagieren.

In der DE-A 30 28 498 wird auf die Probleme hingewiesen, welche die Ausbildung eines Feuchtigkeitsgradienten bei optisch abzulesenden Informationsspeicherplatten auf Basis von PMMA hervorruft. Die genannte DE-A löst das Problem dadurch, daß bei der Umformung und den anschließenden Bearbeitungsschritten die Wasseraufnahme des PMMA minimiert wird.

Die unerwünschten Wirkungen einer uneinheitlichen Wasseraufnahme bei Informationsspeicherplatten ("Regenschirmeffekt") stehen auch im Mittelpunkt der US-PS 4 310 919. Die Lösung des Problems sieht die US-PS in der völlig symmetrischen Gestaltung der Informationsspeicherplatten.

Die vorgeschlagenen Lösungen sind erkennbar darauf gerichtet, die Ausbildung eines Feuchtigkeitsgradienten zu verhindern bzw. seine Wirkung intern zu kompensieren.

In der (nicht vorveröffentlichten) EP-A3-0097 948 wird ein Verfahren zur Herstellung eines Methacrylatharzes mit geringer Hygroskopizität angegeben, das unter Einbeziehung einer fakultativen Komponente - u.a. Styrol - ein ternäres Polymeres darstellen kann. Die Lehre dieser Druckschrift bezieht sich jedoch ausschliesslich auf im Gießverfahren hergestelltes Plattenmaterial. Einem solchen Plattenmaterial Kommen die üblicherweise erreichten, hohen Molgewichte zu. Andererseits spielen Doppelbrechungseffeckte bei der weiteren Verarbeitung praktisch keine Rolle.

Es bestand demnach weiterhin die Aufgabe, ein als Formmasse einzusetzendes Material zur Verfügung

zu stellen, dessen optische und mechanische Oualitäten den stringenten Anforderungen an Informationsspeicherplatten (insbesondere optisch abzulesenden Informationsspeicherplatten) erfüllen, bei dem andererseits die aus der ungleichmäßigen Wasseraufnahme resultierenden Probleme nicht mehr auftreten bzw. keine Rolle mehr spielen.

Lösung

Zur Lösung der vorliegenden Aufgabe eignet sich Acrylharz-Formmasse aufgebaut aus mindestens drei verschiedenen Comonomergruppen, die aus den, Typen A) bis D) und gegebenenfalls weiteren Monomeren der Typen E) und/oder F) und/oder G) ausgewählt sind, wobei

A) Methylmethacrylat
in Anteilen von 20 bis 85 Gew.-%

B) ein oder mehrere Monomere der Formel I

$$CH_2{=}\overset{\overset{\displaystyle R'}{|}}{C}{-}COO{-}(\underset{\underset{\displaystyle R''}{|}}{CH})_n{-}(O)_m{-}Ar \qquad I$$

worin

- R' für Wasserstoff oder Methyl
- R'' für Wasserstoff oder einen Alkylrest mit 1 bis 7 Kohlenstoffatomen
- Ar für einen aromatischen Kohlenwasserstoff
- n eine Zahl von 1 bis 6
- m für 0 oder 1, mit der Maßgabe, daß n und m nicht gleichzeitig 1 sein sollen in Anteilen von 0 bis 50 Gew.-% und

C) ein oder mehrere Monomere der Formel II

$$CH_2{=}\overset{\overset{\displaystyle CH_3}{|}}{C}\ {-}COOR''' \qquad II$$

worin

- R''' für einen gegebenenfalls verzweigten Kohlenwasserstoffrest mit 2 bis 20 Kohlenstoffatomen oder einen cyclischen nichtaromatischen Kohlenwasserstoffrest mit bis zu 12 Kohlenstoffatomen und mindestens 5 Ringkohlenstoffatomen in Anteilen von > 1 bis < 60 Gew.-%,

D) Styrol und/oder $\alpha$-Methylstyrol in Anteilen von > 0.5 bis < 40 Gew.-% und

E) 4-Methylstyrol in Anteilen von 0 bis 9,9 Gew.-%

F) gegebenenfalls weitere Comonomere, deren Löslichkeit den Wert 50 g Monomer pro Liter Wasser bei 25° C nicht überschreitet, und

G) gegebenenfalls weitere, die Polymerkohäsion fördernde Comonomere

bedeutet, mit der Maßgabe, daß das Acrylharz ein durch Molekulargewichtsregler geregeltes Molgewicht besitzt.

Die Summe der Monomeren A) - G) steht für 100 Gew.-%. Bei den Acrylharzen gemäß den Ansprüchen handelt es sich um Polymerisate aus mindestens drei Monomergruppen (Terpolymer) vorzugsweise mit ausgeprägten Anteilen an aromatische Reste enthaltenden Monomeren. Die Anteile der entsprechenden Monomergruppen werden dabei so gewählt, daß die üblicherweise bei aromatischen Monomerbausteinen beobachteten Ordnungsstrukturen - hervorgerufen durch die Tendenz der aromatischen Gruppe zur Assoziation - weitgehend unterdrückt werden.

Die Acrylharz-Formmassen der vorliegenden Erfindung zeichnen sich dadurch aus, daß ihre Wasseraufnahme unter den Bedingungen von DIN 50015 den Wert 1,0 Gew.-%, vorzugsweise 0,8 Gew.-%. nicht überschreitet.

Als besonders überraschend muß betrachtet werden, daß die mechanischen und ganz besonders die optischen Eigenschaften des erfindungsgemäß zu verwendenden Polymersystems sogar den hochgesteckten Anforderungen an optisch abzulesende Informationsspeicherplatten genügen. Dies gilt vor allem

hinsichtlich der Doppelbrechung, die üblicherweise den Einsatz aromatische Gruppen enthaltender Monomerer, z.B. des Styrols selbst, stark begrenzt. Da besonders die Verarbeitungsbedingungen die Doppelbrechung der Proben in hohem Maße bedingen, ist darauf hinzuweisen, daß die erfindungsgemäßen, aus mindestens drei Monomergruppen aufgebauten Copolymere so gestaltet werden können, daß diese Polymerisate zu Formkörpern spritzgegossen werden können, ohne daß Produkte mit einer unzulässig hohen Doppelbrechung (z.B. Gangunterschied $\Delta n > 100$ nm) resultieren. Ebenso ist die Extrusion dieser Formmassen möglich.

Bei der Auswahl der Comonomeren aus den einzelnen Monomergruppen ist darauf zu achten, daß der Anteil der Monomeren der Monomergruppen B) bis E) so groß zu wählen ist, daß das daraus hergestellte Polymerisat die gewünschte, niedrige Wasseraufnahme, z.B. < 1,0 % aufweist. Alle diese Monomeren der Gruppen B) bis E) tragen zur Verringerung der Wasseraufnahme des Methylmethacrylatpolymeren bei. Dabei ist es in der Regel so, daß die aromatische Gruppen enthaltenden Monomeren der Gruppen D) und E) die Wasseraufnahme des Polymerisates besonders stark erniedrigen. Ihr Anteil ist jedoch so zu bemessen, daß die Doppelbrechung nicht über den gewünschten Wert, z.B. 50 nm, ansteigt. Um zu Polymerisaten mit der erforderlichen geringen Wasseraufnahme zu gelangen, sind daher weitere Monomere z.B. vom Typ C) zu copolymerisieren. Es wurde nun gefunden, daß im allgemeinen bei Copolymerisation von aromatischen Monomeren, z.B. von Styrol, mit zwei verschiedenen Comonomeren, nämlich mit Comonomeren der Gruppe A) und der Gruppe C) Polymerisate mit einer geringeren Tendenz zur Ausbildung von doppelbrechenden Strukturen erhalten werden als bei Copolymerisation mit Methylmethacrylat (Monomergruppe A)) allein.

Die erfindungsgemäßen Terpolymeren zeichnen sich also - bei gleichem Anteil an aromatischen Gruppen - im allgemeinen nicht nur durch ein vermindertes Wasseraufnahmevermögen, sondern auch durch eine geringere Doppelbrechung aus (jeweils im Vergleich zu rein binären Copolymeren, z.B. des Methylmethacrylats (Gruppe A)) mit Styrol (Gruppe D)). Vorteilhaft ist auch die Verwendung von Monomeren der Gruppe B). Diese Monomeren verleihen dem Polymerisat eine geringere Wasseraufnahmefähigkeit, verursachen aber andererseits nicht die hohe Tendenz zur Ausbildung von doppelbrechenden Strukturen, wie es z.B. vom Styrol bekannt ist.

Der Anteil dieser Monomeren von Typ B) sollte jedoch im allgemeinen unter 50 Gew.-%, bezogen auf die Gesamtmonomeren liegen, insbesondere jedoch unter 30 Gew.-%. Soweit sie im Polymer vorhanden sind, seien als Richtwerte > 1 und < 30 Gew.-% genannt. Als begrenzender Faktor für den Einsatz größerer Anteile an Monomeren der Gruppe B) ist vor allem die Erniedrigung der Glastemperatur Tg der Polymeren durch diese Monomeren anzusehen. Als besonders bevorzugte Vertreter der Monomergruppe B) sind daher auch vor allem die Ester der Methacrylsäure zu nennen, da diese im Vergleich zu den Estern der Acrylsäure eine höhere Glastemperatur aufweisen. Von besonderer praktischer Bedeutung sind die Verbindungen der Formel I, in denen Ar für einen, gegebenenfalls substituierten Phenylrest steht. Als Substituenten sind besonders Alkylreste mit 1 bis 4 Kohlenstoffatome oder die entsprechenden Äther zu nennen. Insbesondere genannt seien 2-Phenoxyäthylmethacrylat, Benzylmethacrylat, 2-Phenyläthylmethacrylat, 3-Phenylpropylmethacrylat und 1-Phenyläthylmethacrylat.

Der Einsatz größerer Anteile (z.B. > 9,9 Gew.-%) der Monomeren der Gruppe E) = p-Methylstyrol ist **nicht** Gegenstand der vorliegenden Anmeldung, da für den Einsatz dieser Monomeren besondere Gesetzmäßigkeiten gelten.

Als Monomere vom Typ C) kommen vor allem solche Monomeren in Betracht, die die Glastemperatur der Polymeren nicht zu stark erniedrigen, dem Polymerisat aber eine geringere Wasseraufnahmeverleihen. Es sind dies die Ester der Formel II, wobei R''' für einen gegebenenfalls verzweigten Kohlenwasserstoffrest mit 2 bis 20 Kohlenstoffatomen oder einen cyclischen nichtaromatischen Kohlenwasserstoffrest mit bis zu 12 Kohlenstoffatomen und mindestens 5 Ringkohlenstoffatomen steht. Insbesondere seien genannt: Isopropylmethacrylat, Cyclohexylmethacrylat, die verschiedenen Butylmethacrylate sowie n-Propylmethacrylat. Der Anteil dieser Monomeren liegt oberhalb 1 und unter 60 Gew.-%, bezogen auf das Gesamtpolymerisat.

Unter den gegebenenfalls vorhandenen Monomeren vom Typ F sind von A - E verschiedene Monomere mit einer Löslichkeit von < 50 g Monomer pro Liter Wasser bei 25 °C zu verstehen. Es sollen darunter an sich bekannte, radikalisch polymerisierbare Monomere verstanden sein. Vorzugsweise fallen sie unter die allgemeine Formel III

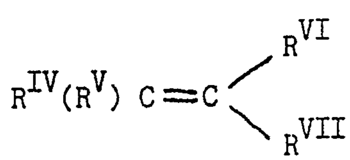

III

worin

| | |
|---|---|
| $R^{IV}$ und $R^{V}$ | für Wasserstoff oder Chlor |
| $R^{VI}$ | für Wasserstoff oder Methyl |
| $R^{VII}$ | für Wasserstoff oder einen Rest $-CH_3$, $-CH=CH_2$, $-CCl=CH_2$, |

$$-O-\overset{O}{\overset{\|}{C}}-R^{VIII},$$

wobei $R^{VIII}$ einen Alkylrest mit 2 bis 14 Kohlenstoffatomen bedeutet, steht, oder

worin

| | |
|---|---|
| $R^{IV}$ | zugleich mit $R^{VI}$ oder $R^{VII}$ für einen Rest $-COOR^{IX}$ steht, wobei $R^{IX}$ einen Alkylrest mit 1 bis 6 Kohlenstoffatomen bedeutet und die übrigen Reste die oben genannten Bedeutungen beibehalten, oder |

worin

| | |
|---|---|
| $R^{VI}$ | für einen Rest $-COOR^{IX}$ und $R^{VII}$ für einen Rest $-CH_2COOR$ steht und die übrigen Reste die genannten Bedeutungen beibehalten. |

Insbesondere seien als Monomere vom Typ F) Olefine wie Butadien, Isopren, Isobutylen, Ester wie Itacon-, Malein- und Fumarsäureester, insbesondere deren Methyl- und Ethylester, ferner Vinylidenchlorid sowie Vinylester von Carbonsäuren mit mehr als 2 Kohlenstoffatomen genannt. Ihr Anteil liegt bei 0 - 30 Gew.-%, vorzugsweise bei 0 - 10 Gew.-%, bezogen auf das Gesamtpolymerisat. Soweit sie im Polymerisat vorhanden sind, sei als Richtwert ein Gehalt von > 5 Gew.-% und > 30 Gew.-% genannt. Darüber hinaus können zu geringen Anteilen, nicht unter A) - E) fallende, die Polymerkohäsion fördernde Monomere enthalten sein. [Typ G)]. Im allgemeinen liegt ihr Anteil im Bereich 0,1 bis > 10 Gew.-%. Genannt seien beispielsweise Acrylnitril und Methacrylnitril.

Die Verwendung der Monomeren des Typs G) ist zum Beispiel von Vorteil, wenn das Polymerisat gegen organische Lösungsmittel stabilisiert werden soll.

Die Bestimmung der Wasseraufnahme der Copolymerisate wird in der Regel am besten an den daraus hergestellten Formkörpern, z.B. der optischen Speicherplatte, durchgeführt. Für einen einfachen und schnellen Zugang zu Daten über das Wasseraufnahmevermögen der gewünschten Copolymeren empfiehlt sich jedoch die Messung der Wasseraufnahme an einer oberflächenreichen Probe, z.B. an einem gemahlenen Substanzpolymerisat oder an einem Perlpolymerisat. Die Wasseraufnahme wird in diesem Fall an einer zuvor bis zur Gewichtskonstanz (z.B. 24 Stunden bei 60 °C) getrockneten Probe ermittelt. Die Wasseraufnahme kann dabei einfach als Gewichtszunahme gemessen werden. Die Messung erfolgt in einem Normklima [DIN 50 015 (feucht)], 23 °C bei 83 % relativer Luftfeuchtigkeit und nach 24 Stunden, da dieser Zeitraum auf jeden Fall Konstanz der Wasseraufnahme gewährleistet.

Nach 24 Stunden Lagerung in diesem Normklima kann die Wasseraufnahme zusätzlich durch Karl-Fischer-Titration bestimmt werden. In der Regel stimmen Gewichtszunahme und Karl-Fischer-Werte gut überein (siehe auch Tab.1).

Nach vorliegenden praktischen Erfahrungen bei kleinen bzw. oberflächenreichen Polymerisat-Proben, wird die Sättigungskonzentration im Normklima schon nach 6 Stunden erreicht.

Die Messung der Doppelbrechung wird an z.B. ca. 1 mm dicken Spritzplättchen durchgeführt. Die in Tabelle I angegebenen Werte sind als orientierende Größen anzusehen, da die Doppelbrechung bekanntlich in erheblichem Maße von der Verarbeitungstechnik abhängt. Es wird jedoch deutlich sichtbar, daß durch Übergang von einem binären Copolymeren zu einem Terpolymeren die Doppelbrechung erniedrigt wird. So zeigt ein Copolymerisat aus 20 Teilen Styrol und 80 Teilen Methylmethacrylat eine Doppelbrechung von 126 nm. Ein unter gleichen Bedingungen hergestelltes Spritzplättchen der Zusammensetzung: 20 Teile Styrol, 20 Teile Cyclohexylmethacrylat, 60 Teile Methylmethacrylat, besitzt dagegen nur eine Doppelbrechung von 70 nm. Es ist also möglich, durch die Verwendung von mehr als zwei Monomerbausteinen Copolymere mit verminderter Orientierbarkeit aufzubauen und so die Ausbildung von doppelbrechenden Strukturen zu erschweren.

Die erfindungsgemäßen Polymerisate bieten sich für eine Reihe von Anwendungen an, insbesondere solchen, bei denen eine geringe Wasseraufnahme, gekoppelt mit geringer Doppelbrechung und guten sonstigen optischen und mechanischen Eigenschaften erforderlich sind. Wie bereits erwähnt, gelten diese Anforderungen besonders für Träger optisch abzulesender Information, insbesondere optischer Speicherplatten. So ist darauf zu achten, daß die Doppelbrechung der als optischer Datenspeicher verwendeten Platten - bei einer Schichtdicke von 1 mm - z.B. 100 nm nicht überschreiten sollte. Besonders bevorzugt sind Datenspeichermaterialien mit einer Doppelbrechung von weniger als 30

nm.

Die Polymerisate eignen sich speziell für die Herstellung derartiger Informationsträger, insbesondere optischer Speicherplatten. Die erfindungsgemäßen Polymerisate eignen sich in hervorragender Weise auch zur Herstellung von Datenspeicherplatten, speziell der unter der Bezeichnung DOR (Digital Optical Recording) bekannten Typen. Die Speicherdichte bei derartigen Platten ist gewöhnlich sehr hoch, sie kann z.B. im Bereich von $10^9$ - $10^{11}$ bits liegen. Die Verarbeitung der Formmasse kann dabei in an sich bekannter Weise, erfolgen. Hingewiesen sei z.B. auf die Möglichkeit, derartige Informationsspeicherplatten durch Extrusion oder insbesondere durch Spritzgießen herzustellen.

Die Monomerzusammensetzung sollte so gewählt werden, daß die Vicat-Erweichungstemperatur der Copolymeren nach DIN 53 460 größer als 70° C, insbesondere jedoch größer als 80° C beträgt.

Herstellung der Polymerisate

Die erfindungsgemäßen Polymerisate werden durch radikalische Polymerisation nach an sich bekannten Verfahren hergestellt.

Die Polymerisation der erfindungsgemäßen Copolymerisate aus mindestens 3 Monomerklassen kann prinzipiell mittels der bekannten Polymerisationsverfahren durchgeführt werden. Insbesondere bietet sich die radikalische Polymerisation an. Die Polymerisation kann in Substanz, in Suspension, in Emulsion oder in Lösung erfolgen.

Die Isolierung der Polymerisatfeststoffe erfolgt bei der Polymerisation in Suspension, z.B. durch einfaches Abfiltrieren der Perlen mit nachfolgendem Waschen und Trocknen, bei der Polymerisation in Emulsion z.B. durch Fällung, Gefrierkoagulation oder durch Sprühtrocknung. Die Gewinnung des Polymerisatfeststoffs aus der Lösungspolymerisation kann z.B. durch Ausfällen in einem Nicht-Lösungsmittel, z.B. Methanol, erfolgen.

In der Regel erfolgt die Polymerisation mittels radikalischer Initiatoren, z.B. mittels organischer Peroxide und Perester wie z.B. Dibenzoylperoxid bzw. t-Butyl-per-2-Ethylhexanoat oder aber durch Azoverbindungen wie z.B. Azo-isobutyronitril u.a. Initiatoren mehr. Die Polymerisationstemperatur richtet sich dabei nach der Zerfallgeschwindigkeit der Initiatoren. Zur Einstellung des Molekulargewichtes werden Polymerisationsregler, z.B.

t.-Dodecylmercaptan, 2-Ethylhexylthioglykolat u.a. mehr verwendet. Ganz allgemein kommen die Polymerisationsverfahren zur Anwendung, wie sie für Methylmethacrylat und dessen Copolymerisation mit anderen Monomeren bekannt sind. Vgl. auch Houben-Weyl, Methoden der Organischen Chemie, 4. Auflage, Band 14/1.

Herstellung von Formkörpern als Träger optisch abzulesender Information

Zur Herstellung von Formkörpern als Träger optisch abzulesender Information können die erfindunsgemäßen, aus mindestens drei zusammengesetzten Monomerenmischungen direkt mit Hilfe eines Initiators und gegebenenfalls mit Hilfe einer Redoxkomponente polymerisiert werden. Im allgemeinen wird die Herstellung der Formkörper durch Spritzguß oder aber durch Extrusion und anschließendes Herauslösen des Formkörpers erfolgen. Darüber hinaus sind auch gepreßte Formteile herstellbar. Damit ergibt sich ein Verarbeitungsprofil der Formmasse. Während das Polymerisat einerseits gut zu verarbeiten sein sollte - was ein möglichst kleines Molekulargewicht bedingt - sollte der Polymerisationsgrad ein gewisses Mindestmaß nicht unterschreiten, da das Material dann zu spröde wird. In der Regel sind daher Molekulargewichte von > 50 000, insbesondere von > 70 000 erforderlich. Dabei ist jedoch darauf zu achten, daß besonders beim Einsatz der Massen in der Extrusion oder im Spritzguß, die Molekulargewichte nicht zu groß werden sollten (z.B. $\overline{M} = 1 \cdot 10^6$), da dann verstärkt Doppelbrechung auftreten kann. Speziell für die Anwendung als optisch abzulesendes Datenspeichermaterial ist eine minimale Lichtdurchlässigkeit erforderlich. Diese richtet sich naturgemäß nach der z.B. zum Abruf der gespeicherten Daten verwendeten Lichtart. Es ist demnach selbstverständlich, daß das zugrundeliegende Material eine äußerst geringe Eigenabsorption haben sollte. Ganz allgemein kann gesagt werden, daß die Lichtdurchlässigkeit des Materials - gemessen an einer 3 mm dicken Platte - 80 %, insbesondere 85 % überschreiten sollte. Die Lichtdurchlässigkeit wird dabei nach DIN 5036 bestimmt.

Ebenfalls hohe Anforderungen werden hinsichtlich der Doppelbrechung gestellt. So ist darauf zu achten, daß die Doppelbrechung der als optischer Informationsspeicher verwendeten Platten - bei einer Schichtdikke von 1 mm - z.B. 100 nm nicht überschreiten sollte, besonders bevorzugt sind Datenspeichermaterialien mit einer Doppelbrechung von weniger als 30 nm.

Die folgenden Beispiele dienen der Erläuterung der Erfindung, sollen jedoch keine Einschränkung

darstellen.

Beispiel 1 Polymerisation in Perlform

Für die Perlpolymerisation der Methylmethacrylat haltigen Monomergemische gelten die Angaben in Houben-Weyl, Methoden der organischen Chemie, 4. Auflage, Band 14/1, Verlag Chemie. Außer hochmolekulare Dispergatoren z.B. Polyvinylalkohol oder styrolmaleinsaures Natrium kommen auch Pulverdispergatoren in Frage, z.B. in situ erzeugtes Aluminiumhydroxid. (Vgl. hierzu auch die deutsche Patentanmeldung P 31 50 730 vom 22.12.81 und Houben-Weyl, loc.cit. oben, pp. 406-429).

So wird in einem Ansatz mit 1000 ml destilliertem Wasser, enthaltend einen der oben genannten Dispergatoren, eine Monomer-, Regler-, Initiatormischung bestehend aus
300 g Methylmethacrylat
100 g 2-Phenoxyäthylmethacrylat
50 g Cyclohexylmethacrylat
50 g Styrol
4 g Benzoylperoxid (70 %ig)
3 g 2-Ethylhexylthioglykolat
3 Stunden bei 80 - 85 °C gerührt. Danach wird 2 Stunden bei 90 °C weitergerührt.
Nach Beendigung der Polymerisation wird gekühlt, das Perlpolymerisat mit destilliertem Wasser gewaschen und getrocknet. Es resultieren gut rieselfähige, klare Perlpolymerisate. Die Wasseraufnahme des Polymerisates kann vorteilhaft direkt an den Perlen durchgeführt werden.
Zur Herstellung von Spritzgußplatten wird aus den Perlen zuvor ein Gleichkorngranulat hergestellt. Auch für die Herstellung von Extrudaten wird von einem Gleichkorngranulat ausgegangen. Charakterisierung des Polymerisats siehe Tab. 1. Die Vicat-Erweichungstemperatur (nach DIN 53 460) liegt bei 85 °C.

Beispiel 2

Man verfährt wie in Beispiel 1, wählt jedoch eine andere Monomerenzusammensetzung:
300 g Methylmethacrylat
100 g Cyclohexylmethacrylat
100 g 3-Phenylpropylmethacrylat
4 g Benzoylperoxid (70 %ig)
3 g 2-Ethylhexylthioglykolat
Wasseraufnahme und Doppelbrechung der Spritzplättchen siehe Tab. 1. Die Vicat-Erweichungstemperatur liegt bei 84 °C. Die Lichtdurchlässigkeit im Bereich 500 - 700 nm ist > 90 %. (Messung an einem 3 mm dicken Probeplättchen).

Beispiel 3

Man verfährt wie in Beispiel 1 und 2, wählt jedoch eine andere Monomerenzusammensetzung:
375 g Methylmethacrylat
100 g 3-Phenylpropylmethacrylat
25 g Isobutylmethacrylat
4 g Benzoylperoxid (70 %ig)
3 g 2-Ethylhexylthioglykolat
Die Vicat-Erweichungstemperatur liegt bei 81 °C. Die Lichtdurchlässigkeit im Bereich 500 - 700 nm ist > 90 %.

Beispiel 4

Man verfährt wie in Beispiel 1 - 3, wählt jedoch eine andere Monomerenzusammensetzung und verlängert die Reaktionszeit auf 7 Stunden.
300 g Methylmethacrylat
100 g Styrol
100 g Cyclohexylmethacrylat
5 g Benzoylperoxid (70 %ig)
3 g 2-Ethylthioglykolat
Vicat-Erweichungstemperatur: 100 °C, Lichtdurchlässigkeit im Bereich 500 - 700 nm ist > 85 %.

Beispiel 5 Vergleichsbeispiel

Man verfährt wie in Beispiel 4, wählt jedoch nur eine binäre Monomerenmischung

400 g Methylmethacrylat
100 g Styrol
5 g Benzoylperoxid (70 %ig)
3 g 2-Ethylhexylthioglykolat

Man erhält gut rieselfähige, klare Perlpolymerisate. Die Doppelbrechung der daraus hergestellten Spritzplättchen liegt deutlich über den bei den Polymerisaten gemäß Beispiel 1-4 gefundenen Werten (siehe Tab. 1). Vicat-Erweichungstemperatur: 96 °C.

Tab. 1 Charakterisierung der Polymeren gemäß Beispiel 1-5

| Beispiel Nr. | Zusammensetzung der Polymerisate [Gew.-%] MMA | S | CMA | JBMA | POEMA | PPMA | Wasseraufnahme*) [%] grav. | KF | Doppel-brechung**) [nm] |
|---|---|---|---|---|---|---|---|---|---|
| 1 | 60 | 10 | 10 | - | 20 | - | 0,77 | 0,74 | 19 |
| 2 | 60 | - | 20 | - | - | 20 | 0,62 | 0,76 | 3 |
| 3 | 75 | - | - | 5 | - | 20 | 0,95 | 0,93 | 2 |
| 4 ****) | 60 | 20 | 20 | - | - | - | 0,78 | 0,80 | 70 |
| 5 ***) | 80 | 20 | - | - | - | - | 1,03 | 1,04 | 126 |

*) Klima: DIN 50 015 (feucht), 23°C / 83 % r F
**) gemessen an einem 1 mm dicken Spritzplättchen
***) Vergleichsansatz mit nur zwei Comonomeren
****) Vergleichsansatz (Keine Komponente B)

MMA : Methylmethacrylat
S : Styrol
CMA : Cyclohexylmethacrylat
JBMA : Isobutylmethacrylat
POEMA : Phenoxyethylmethacrylat
PPMA : 3-Phenylpropylmethacrylat

## Patentansprüche

1. Acrylharz-Formmasse mit geringer Wasseraufnahme, die doppelbrechungsarm verarbeitet werden kann,

   dadurch gekennzeichnet,

   daß die Acrylharze auf Basis von mindestens drei verschiedenen. Comonomergruppen ausgewählt aus den Typen A) bis D) und gegebenenfalls weiteren Monomeren der Typen E) und/oder F) und/oder G) aufgebaut sind, wobei
   A) Methylmethacrylat
   in Anteilen von 20 bis 85 Gew.-%
   B) ein oder mehrere Monomere der Formel I

$$CH_2 = \underset{}{\overset{R'}{\overset{|}{C}}} - COO - (\underset{\underset{R''}{|}}{CH})_n - (O)_m - Ar \qquad I$$

   worin
   R' für Wasserstoff oder Methyl
   R'' für Wasserstoff oder einen Alkylrest mit 1 bis 7 Kohlenstoffatomen
   Ar für einen aromatischen Kohlenwasserstoff
   n für eine Zahl von 1 bis 6
   m für 0 oder 1, mit der Maßgabe, daß n und m nicht gleichzeitig 1 sein sollen in Anteilen von 0 bis 50 Gew.-% und
   C) ein oder mehrere Monomere der Formel II

$$CH_2 = \overset{CH_3}{\overset{|}{C}} - COOR''' \qquad II$$

   worin
   R''' für einen gegebenenfalls verzweigten Kohlenwasserstoffrest mit 2 bis 20 Kohlenstoffatomen oder einen cyclischen nichtaromatischen Kohlenwasserstoffrest mit bis zu 12 Kohlenstoffatomen und mindestens 5 Ringkohlenstoffatomen in Anteilen größer 1 und kleiner 60 Gew.-%
   D) Styrol und/oder α-Methylstyrol in Anteilen größer 0,5 und kleiner 40 Gew.-% und
   E) 4-Methylstyrol ihn Anteilen von 0 bis 9,9 Gew.-%
   F) gegebenenfalls weitere Comonomere, deren Löslichkeit den Wert 50 g Monomer pro Liter Wasser bei 25 Grad C nicht überschreitet, und
   G) gegebenenfalls weitere, die Polymerkohäsion fördernde Comonomere
   bedeutet, mit der Maßgabe, daß das Acrylharz ein durch Molekulargewichtsregler geregeltes Molgewicht besitzt.

2. Acrylharz-Formmasse gemäß Anspruch 1, dadurch gekennzeichnet, daß der Anteil der Monomeren vom Typ)B bei 5 bis 40 Gew.-% liegt.

3. Acrylharz-Formmasse gemäß den Ansprüchen 1 und 2, dadurch gekennzeichnet, daß als Monomere des Typs B solche aus der Gruppe 2-Phenoxyäthylmethacrylat, Benzylmethacrylat, 2-Phenyläthylmethacrylat, 3-Phenylpropylmethacrylat verwendet werden.

4. Acrylharz Formmasse gemäß den Ansprüchen 1 und 2, dadurch gekennzeichnet, daß sie neben den genannten Mengen an Monomeren des Typs A), wenigstens 10 Gew.-% an Monomeren des Typs B) und wenigstens 10 Gew.-% an Monomeren des Typs C) gleichzeitig enthält.

5. Acrylharz-Formmasse gemäß Anspruch 1, dadurch gekennzeichnet, daß sie neben der genannten Menge an Monomeren des Typs A) wenigstens 10 Gew.-% an Monomeren des Typs C) und wenigstens 5 Gew.-% an Monomeren des Typs D) gleichzeitig enthält.

6. Acrylharz-Formmasse gemäß den Ansprüchen 1 und 2, dadurch gekennzeichnet, daß sie neben der genannten Menge an Monomeren des Typs A) wenigstens 5 Gew.-% an Monomeren des Typs B), wenigstens 5 Gew.-% an Monomeren des Typs C) und wenigstens 5 Gew.-% an Monomeren des Typs D) gleichzeitig enthält.

7. Acrylharz-Formmasse gemäß den Ansprüchen 5 und 6, dadurch gekennzeichnet, daß als Comonomere vom Typ C) Cyclohexylmethacrylat verwendet wird.

8. Acrylharz-Formmasse gemäß Anspruch 1, dadurch gekennzeichnet, daß ihre Wasseraufnahme unter den Bedingungen DIN 50 015 den Wert 1,0 Gew.-% nicht überschreitet.

9. Acrylharz Formmasse gemäß den Ansprüchen 1 bis 8, dadurch gekennzeichnet, daß das Acrylharz eine Vicat-Erweichungstemperatur nach DIN 53 460 von größer 70 °C besitzen.

10. Acrylharz-Formmasse gemäß Ansprüchen 1 bis 9, dadurch gekennzeichnet, daß bei einer Schichtdicke von 3 mm seine Lichtdurchlässigkeit bei Einstrahlung des bei optischer Ablesung verwendeten Lichts > 80 %, vorzugsweise > 90 %, ist.

11. Verwendung der Acrylharz-Formmasse mit geringem Wasseraufnahmevermögen gemäß Anspruch 1 als Trägermaterial für gespeicherte Information.

12. Verwendung der Acrylharz-Formmasse mit geringem Wasseraufnahmevermögen gemäß Anspruch 1 als Material für optisch abzulesende Informationsspeicherplatten.

## Claims

1. Acrylic resin moulding composition with low water absorption which can be processed with low birefringence, characterised in that the acrylic resins are synthesised on the basis of at least three different groups of comonomers selected from types A) to D) and optionally other monomers of types E and/or F and/or G, namely

   A) methylmethacrylate in amounts of from 20 to 85% by weight

   B) one or more monomers of Formula I

$$CH_2 = \overset{\overset{R'}{|}}{C} - COO - (\underset{\underset{R''}{|}}{CH})_n - (O)_m - Ar \qquad I$$

   R' represents hydrogen or methyl,
   R'' represents hydrogen or a $C_{1-7}$ alkyl group,
   Ar represents an aromatic hydrocarbon,
   n represents a number from 1 to 6,
   m represents 0 or 1, with the proviso that n and m cannot simultaneously represent 1, in amounts from 0 to 50% by weight and

   C) one or more monomers of Formula II

$$CH_2 = \overset{\overset{CH_3}{|}}{C} - COOR''' \qquad II$$

wherein R''' represents an optionally branched $C_{2-20}$ hydrocarbon group or a cyclic non-aromatic hydrocarbon group having up to 12 carbon atoms and at least 5 ring carbon atoms, in amounts of greater than 1 and less than 60% by weight,
D) styrene and/or alpha-methylstyrene in amounts greater than 0.5 and less than 40% by weight and
E) 4-methylstyrene in amounts from 0 to 9.9% by weight
F) optionally other comonomers the solubility of which does not exceed a level of 50g of monomer per litre of water at 25° C, and
G) optionally other comonomers which promote polymer cohesion,
with the proviso that the acrylic resins have a molecular weight which is regulated by molecular weight regulators.

2. Acrylic resin moulding composition according to claim 1, characterised in that the proportion of monomers of type B) is from 5 to 40% by weight.

3. Acrylic resin moulding composition according to claims 1 and 2, characterised in that the monomers of type B) used are those selected from the group 2-phenoxyethyl methacrylate, benzylmethacrylate, 2-phenylethyl methacrylate and 3-phenylpropyl methacrylate.

4. Acrylic resin moulding composition according to claims 1 and 2, characterised in that, in addition to the specified amounts of monomers of type A), it simultaneously contains at least 10% by weight of monomers of type B) and at least 10% by weight of monomers of type C).

5. Acrylic resin moulding composition according to claim 1, characterised in that it contains, in addition to the specified amount of monomers of type A), at least 10% by weight of monomers of type C) and at least 5% by weight of monomers of type D).

6. Acrylic resin moulding composition according to claims 1 and 2, characterised in that it contains, in addition to the specified amount of monomers of type A), at least 5% by weight of monomers of type B), at least 5% by weight of monomers of type C) and at least 5% by weight of monomers of type D).

7. Acrylic resin moulding composition according to claims 5 and 6, characterised in that cyclohexylmethacrylate is used as a comonomer of type C).

8. Acrylic resin moulding composition according to claim 1, characterised in that its water uptake under the condition of DIN 50 015, does not exceed a level of 1.0% by weight.

9. Acrylic resin moulding composition according to claims 1 to 8, characterised in that the acrylic resins have a Vicat softening temperature according to DIN 53 460 of above 70° C.

10. Acrylic resin moulding composition according to claims 1 to 9, characterised in that, with a layer thickness of 3mm, its transparency when irradiated with the light used for optical scanning is greater than 80%, preferably greater than 90%.

11. Use of the acrylic resin moulding composition with low water absorption according to claim 1 as a carrier material for stored information.

12. Use of the acrylic resin moulding composition with low water absorption according to claim 1 as a material for optically scanned information storage discs.

**Revendications**

1. Masse à mouler de résine acrylique à faible absorption d'eau, qui peut être traitée en vue d'une faible biréfringence, caractérisée en ce que la résine acrylique est formée à base d'au moins trois groupes différents de comonomères choisis parmi les types A) à D) et éventuellement d'autres monomères des types E) et/ou F) et/ou G), à savoir
A) le méthacrylate de méthyle
dans des proportions de 20 à 85% en poids,
B) un ou plusieurs monomères de formule I

$$CH_2 = \overset{R'}{\underset{|}{C}} - COO - (\underset{R''}{CH})_n - (O)_m - Ar \qquad I$$

dans laquelle
- R' est mis pour un atome d'hydrogène ou un reste méthyle,
- R" est mis pour un atome d'hydrogène ou un reste alkyle à 1-7 atomes de carbone,
- Ar est mis pour un reste hydrocarboné aromatique,
- n est mis pour un nombre de 1 à 6,
- m est mis pour 0 ou 1, étant spécifié que n et m ne peuvent pas être mis simultanément pour 1,

dans des proportions de 0 à 50% en poids,

C) un ou plusieurs monomères de formule II

$$CH_2 - \overset{CH_3}{\underset{|}{C}} - COOR''' \qquad II$$

dans laquelle
- R''' est mis pour un reste hydrocarboné éventuellement ramifié à 2-20 atomes de carbone ou pour un reste hydrocarboné non aromatique cyclique renfermant jusqu'à 12 atomes de carbone et au moins 5 atomes de carbone dans le noyau,

dans des proportions supérieures à 1% et inférieures à 60% en poids,

D) le styrène et/ou l'α-méthylstyrène dans des proportions supérieures à 0,5% et inférieures à 40% en poids, et

E) le 4-méthylstyrène dans des proportions de 0 à 9,9% en poids,

F) éventuellement d'autres comonomères dont la solubilité ne dépasse pas la valeur de 50 g de monomère par litre d'eau à 25° C, et

G) éventuellement d'autres comonomères améliorant la cohésion du polymère,

étant spécifié que la résine acrylique a un poids moléculaire réglé par un régulateur de poids moléculaire.

2. Masse à mouler de résine acrylique selon la revendication 1, caractérisée en ce que la part des monomères du type B) se situe entre 5 et 40% en poids.

3. Masse à mouler de résine acrylique selon la revendication 1 ou 2, caractérisée en ce qu'il est utilisé, comme monomères du type B, ceux du groupe comprenant le méthacrylate de 2-phénoxyéthyle, le méthacrylate de benzyle, le méthacrylate de 2-phényléthyle et le méthacrylate de 3-phénylpropyle.

4. Masse à mouler de résine acrylique selon la revendication 1 ou 2, caractérisée en ce qu'elle contient simultanément, en dehors des quantités spécifiées de monomères du type A), au moins 10% en poids de monomères du type B) et au moins 10% en poids de monomères du type C).

5. Masse à mouler de résine acrylique selon la revendication 1, caractérisée en ce qu'elle contient simultanément, en dehors des quantités spécifiées de monomères du type A), au moins 10% en poids de monomères du type C) et au moins 5% en poids de monomères du type D).

6. Masse à mouler de résine acrylique selon la revendication 1 au 2, caractérisée en ce qu'elle contient simultanément, en dehors des quantités spécifiées de monomères du type A), au mains 5% en poids de monomères du type B), au moins 5% en poids de monomères du type C) et au moins 5% en poids de monomères du type D).

7. Masse à mouler de résine acrylique selon la revendication 5 ou 6, caractérisée en ce que du méthacrylate de cyclohexyle est utilisé comme comonomère du type C).

**8.** Masse à mouler de résine acrylique selon la revendication 1, caractérisée en ce que son absorption d'eau dans les conditions de la DIX 50 015 ne dépasse pas la valeur de 1,0% en poids.

**9.** Masse à mouler de résine acrylique selon l'une quelconque des revendications 1 à 8, caractérisée en ce que la résine acrylique a une température de ramollissement de Vicat, selon la DIN 53 460, de plus de 70 ° C.

**10.** Masse à mouler de résine acrylique selon l'une quelconque des revendications 1 à 9, caractérisée en ce qu'avec une épaisseur de couche de 3 mm, sa transparence à l'irradiation par la lumière utilisée pour la lecture optique est supérieure à 80%, de préférence supérieure à 90%.

**11.** Utilisation de la masse à mouler de résine acrylique à faible absorption d'eau selon la revendication 1 comme matériau de support pour informations mémorisées.

**12.** Utilisation de la masse à mouler de résine acrylique à faible absorption d'eau selon la revendication 1 comme matériau pour des disques de mémorisation d'informations destinés à être lus optiquement.